# EUROPEAN PATENT APPLICATION

(11) **EP 0 788 092 A1**
(43) Date of publication of application: **06.08.1997**
(21) Application number: 97101503.7
(22) Date of filing: 31.01.1997
(51) Int. Cl.: G11B 5/588

(54) **Record head alignment for a helical scan recorder using play head information**

(30) Priority: 31.01.1996 US 596394
(71) Applicant: AMPEX CORPORATION, Redwood City, California 94063-3199 (US)
(72) Inventor: Steele, Robert B., Menlo Park, California 94025 (US); Hallamasek, Kurt F., Oakland, California 94605 (US); Kambies, Keith A., Fremont, California 94555 (US)
(74) Representative: Horton, Andrew Robert Grant

(57) **Abstract**

A helical-scan recorder that includes an automatic scan-tracking system that permits the playback heads to be aligned with the track during playback, by detection of the maximum RF signal from the head and servo control of the head in response to the RF signal. In addition, by evaluating the position of the record head with respect to the playback head, the offset error for the playback head can be used as part of the information necessary to properly align the record head.

## Description

The present invention relates to a technique for head alignment within a helical-scan recorder to permit high-quality helical-scan editing. More particularly, the invention concerns a technique that takes advantage of data from an automatic scan-tracking (AST) system used with the helical-scan recorder.

High-quality editing within a helical-scan recorder requires alignment of various mechanical and electronic elements. Editing becomes more difficult if it is performed on a machine other than the one used for the original recording of the tape. In addition, the use of smaller modern tape formats that record information on less tape area causes additional editing problems due to the criticality of the alignment.

One possible technique is to adjust the transport mechanical elements physically to their normal positions, and to adjust the electronic elements within the system to follow the timing prescribed by the tape format. Unfortunately, this requires a high level of precision that requires substantial experience and skill of an operator. Consequently, a helical-scan recording system including the ability to self-compensate in such situations would be advantageous.

Playback heads within helical-scan recording systems have been track-aligned for some time using an automatic scan-tracking system. In such systems, the playback head is arranged to provide a transducing region that is controllably displaceable in a direction which is transverse the direction along a recorded track. In particular, the head may be mounted upon a piezoelectric bender element or on an armature that swings along an axis perpendicular to the direction of rotation of the scanner. An electronic servo arrangement is provided to adjust the transverse displacement of the playback head (usually called 'elevation') to maximize the amplitude of the signal (usually called 'RF-level') played back by this head. This servo system may use a measure of the playback signal level to develop a playback head-to-track misregistration error signal which, after amplification, is applied to drive the head elevation to a value which maximizes the said signal output.

Automatic scan-tracking systems and transducers suitable for them are described in, for example, US-A-4151570, US-A-4163993, US-A-4308560, US-A-4481544, US-A-4494153, US-A-4933784, GB-A-1579854 and EP-A-0171957.

Unfortunately, the use of such servo technology in association with record heads has not been satisfactory, primarily because it requires the capability to play back data by heads whose primary function is to record data. This is particularly true for record heads that have a width much wider than the tracks they produce. Such head widths are used in order to eliminate the need for extra erase heads, but they tend to allow detection of cross-talk from adjacent tracks when playback through these record heads is attempted.

Consequently, current helical-scan recorders use automatic scan-tracking only on the playback heads. A need still exists for a solution for easy and automatic alignment of record heads with data recorded on tape in such recorders, to permit high quality editing and other operations.

Accordingly, it is a feature of the present invention to provide an improved technique for record head-to-track alignment on a helical-scan recorder so that high-quality editing is possible, even when the tapes to be edited have been originally produced upon another machine.

It is another feature of the invention to provide such improved record head-to-track alignment in a configuration that employs data from an existing automatic scan-tracking system of the recorder.

The state of the art is indicated in the foregoing.

According to one aspect the invention provides a method of adjustment of a helical-scan recorder that embodies a record head, a playback head and an automatic scan-tracking system associated with the playback head, the method comprising making a new recording on a tape by means of the recorder and at the same time playing back the recording while using the automatic scan-tracking system; storing an elevation of the playback head as obtained from the automatic scan-tracking system; and playing back a recorded tape and adjusting the longitudinal velocity and phase of the tape while operating the automatic scan-tracking system until a measured elevation of the playback head corresponds to the stored elevation (18).

The longitudinal velocity and phase of the tape may be controlled by means of a control-track servo having a velocity-closed inner loop and the difference between the stored elevation and the measured elevation of the playback head may be applied as an offset to the control-track servo.

The invention also provides a method for adjusting a helical-scan recorder that includes a rotary scanner carrying a record head and a playback head which has an associated automatic scan-tracking system, comprising the steps of:
(a) recording in a memory automatic scan-tracking elevation and playback timing from a tape made on the transport of the recorder;
(b) adjusting the longitudinal tracking of the tape and the phase of the scanner to a standardised tape until the automatic scan-tracking head elevation and playback timing are the same as the recorded values; and
(c) reading a selected tape that is to be edited and adjusting the longitudinal tracking and scanner phase until the automatic scan-tracking system indicates that the head elevation and playback timing have been corrected.

Figure 1 illustrates reference points associated with a section of tape having a helical-scan recording formed thereon;
Figure 2 illustrates an edit of poor configuration, adversely affecting helical data tracks and the longitudinal control track, that has occurred on a tape such as that illustrated in Figure 1;
Figure 3 illustrates an edit of poor configuration, adversely affecting helical data tracks, that has occurred on a tape such as that illustrated in Figure 1;
Figure 4 illustrates an edit of poor configuration, adversely affecting in-track location of data in the helical data tracks, that has occurred on a tape such as that illustrated in Figure 1;
Figure 5 illustrates a correct edit that has occurred on a tape such as that illustrated in Figure 1;
Figure 6 illustrates a playback head and record head alignment to a tape when only playback head position is optimized;
Figure 7 illustrates an optimized record and play head alignment to a tape;
Figure 8 illustrates an exemplary servo configuration for the system of this invention; and
Figure 9 is a flowchart of a head correction routine forming part of the invention.

The invention now to be described is based on a helical-scan recorder that includes an automatic scan-tracking system that permits the playback heads to be aligned with the track during playback, by maximizing the RF signal from the head whose elevation is under servo control in response to the RF signal. In addition, by evaluating the position of the record head with respect to the playback head at a point in the process described in the sequel, the offset error for the playback head can be used as part of the information necessary to properly align the record head with data recorded on a standard tape or tape recorded on another transport. This is preferably done as part of a process that can be summarized as follows:
(1) One makes a new scratch recording on the machine to be used and reads it in a record confidence mode using the automatic scan-tracking system of the transport. A 'scratch recording' is a recording on a blank tape, or a recording on a tape whose previous recordings are being disregarded during the new recording. In the record confidence mode the playback channel reads the information that is currently being recorded by the record channel. The elevation of the playback heads obtained from the automatic scan-tracking system are then noted and remembered.
(2) A standardized tape is then played on the transport with the longitudinal tracking adjusted to set the playback heads at the elevations remembered for the scratch recording.
(3) The selected tape to be edited is inserted into the machine wherein the remembered elevations are used to produce high-quality editing using the hardware of the system and a software routine associated with the recorder.

A similar process can be used to automatically adjust helical timing for the recorder.

Alternatively, the remembered offsets may be used to produce a newly recorded tape which conforms to the format standard.

A preferred embodiment of the invention will now be described.

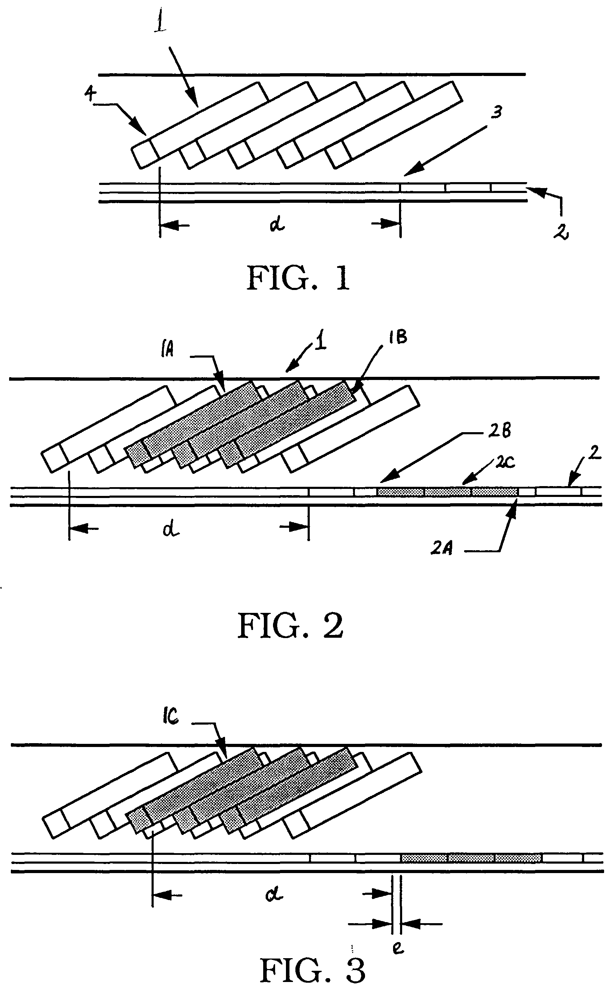

Figure 1 illustrates a helical data track 1 recorded on a section of tape by a record head mounted on a rotating scanner of a helical-scan recorder, in known fashion. A longitudinal track 2 is recorded by a fixed record head, which is also used for playback. The longitudinal and helical tracks each have reference points 3 and 4 respectively that are used for alignment. Helical data tracks contain user data, the longitudinal track contains information used by the servo system for tape positioning. The nominal distance d along the tape between the longitudinal position of the helical reference point and its corresponding reference point in the longitudinal track is prescribed by the tape format standard. When a recording is made, the actual distance d is a function of the mechanical distance between the record heads on the scanner and the longitudinal head, the timing of the longitudinal record signal, the timing of the helical record signal, the control track phase and the scanner phase.

Figure 2 illustrates an example of a bad insert edit represented by shaded helical data tracks 1A and a shaded longitudinal track 2C extending from points 2A and 2B, which are not coincident with previously recorded transitions or phases of the longitudinal tracks, so that the new longitudinal data is overwritten on the tape at an incorrect position vis-a-vis the original data. This type of edit may occur when tape m controlled so that the control track phase is such that the play head is at nominal elevation properly aligned with the previously recorded data tracks and an edit is made using nominal values for longitudinal track record timing, helical track record timing, and scanner phase. The overwritten data is not in phase with the original data. On playback, the recorder will servo adjust the longitudinal phase of the tape once the edit begins at point 2A and will revert to the original phase progression once the edit is finished at point 2B. Similarly, the automatic scan-tracking servo system of the recorder will attempt to correct for the discontinuity in the location of the track centre by adjusting the playback head elevation when it enters and leaves the edited area. The transients in tape and head motion that result when the servo system compensates for the discontinuities in the control track phase and the helical track location are undesirable and violate the constant-speed requirement of the tape format. Additionally, the overwritten data on the helical tracks is not aligned correctly with the previously recorded data at the transitions 1A and 1B. Consequently, the original data has been partially erased by the first part of the overwritten data at 1A. The remaining small segment of old data at 1B could be potentially confusing to the automatic scan-tracking system of the recorder, which also may adversely affect the recovery of the recorded data.

Figure 3 illustrates another edit 1C wherein the longitudinal track has been edited properly but the helical tracks have not. This type of edit may occur when tape motion is controlled as before, but the record timing for the longitudinal track has been adjusted so that the recording with the fixed longitudinal track head is properly aligned with the previously recorded longitudinal track during the edit. Note that the location of the newly recorded longitudinal track has been corrected to match the location of the existing track on tape even though the transport is not set with the proper nominal helical data head-to-longitudinal track head spacing. This correction made by adjusting the longitudinal track record timing represents the transport's mechanical longitudinal error (e).

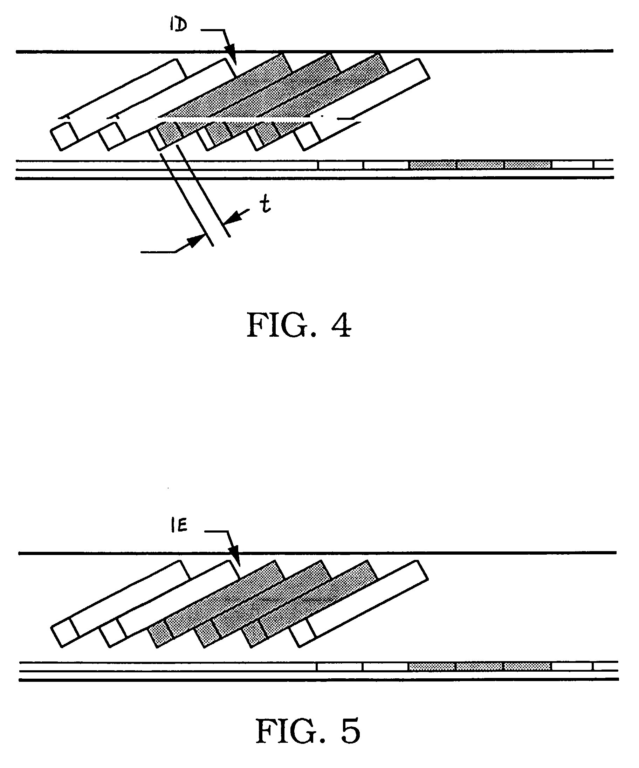

Even when the longitudinal track is correct and the helical tracks are properly overwritten, the scanner phase and helical-scan record data timing must still be adjusted to align the in-track position of old and newly written data. An edit with improperly adjusted helical record timing is illustrated in Figure 4, wherein the new tracks 1D exhibit timing error (i.e. helical-scan phase error t).

Finally, a correct edit 1E is illustrated in Figure 5 wherein all the newly written components align with the original data components. This still does not ensure that the tape is recorded in accordance with the prescribed format. It simply means that the tape edit will occur without new problems and will not appear to be unusual. The conformity of the tape transport to the format standard is a related problem that is alleviated by the technique described herein as part of the present invention.

The present invention includes a technique employed during a record pass to provide proper head alignment, based upon the relationship of the automatic scan-tracking elevation both to the position of the record head and to the recorded image on the tape. In using the machine in 'record confidence' mode any apparent variation in the elevation, derived from the automatic scan-tracking system, from the theoretical nominal elevation is noted as an indication of the helical record head-to-playback head alignment and used in correction of various alignment errors.

Once the position of the record head with respect to the playback head is known, it is possible to locate the record head at a desired position with respect to the tape by use of data that locates the playback head with respect to the tape. The relationship between the tape and the playback head is determined during a play operation, prior to an edit, from the automatic scan-tracking servo system. Longitudinal tracking and scanner phase may be adjusted to place the playback head in a desired position, again based upon the relationship of the playback head to the record head.

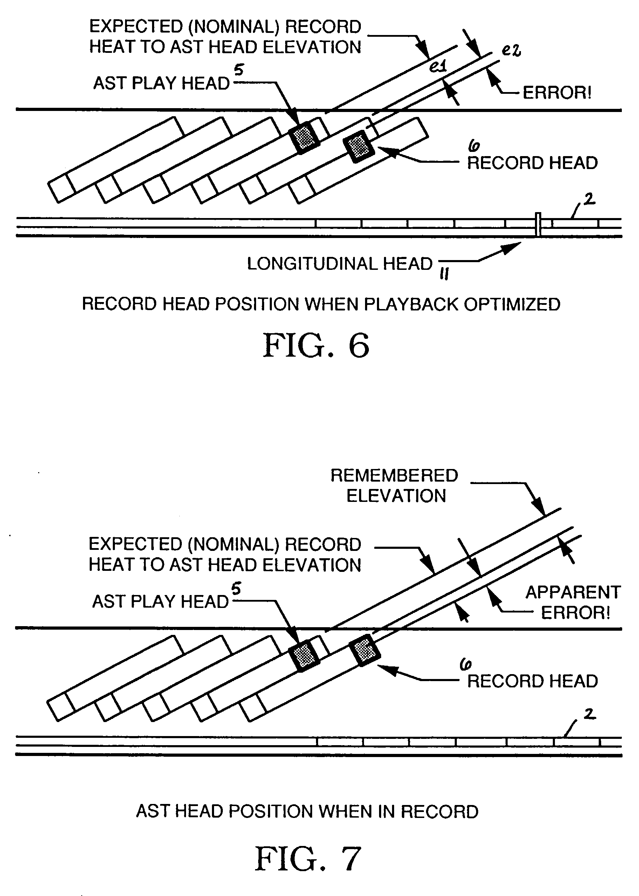

Figure 6 illustrates schematically the positional relationship of a recorded tape, an automatic scan-tracking head 5 and a record head 6 of a recorder operating in the playback mode. The longitudinal track (read by a stationary head 11) is moving in a nominally correct phase progression. The automatic scan-tracking head 3 has compensated for any track misregistration errors by changing its elevation and centring on the respective data track to optimize playback signal levels. The distance e1 is the nominal elevation that separates corresponding playback heads and record heads. The distance e2 represents the error between the actual and correct elevations of the record head and (e1 + e2) represents the difference in elevations of the playback head and the record head.

The record head at this point is in a position unsuitable for recording. Its position on the scanner perpendicular to the track (i.e. its elevation) is fixed, so the only way to achieve the correct head-to-track spacing is by adjusting the position of the tape via an offset in the control track servo. Exactly what this offset is, i.e. what the relationship between record and playback head, is determined by monitoring the playback head elevation that the automatic scan-tracking servo commands when centring on tracks recorded in the record confidence mode.

Figure 7 shows the use of the stored relationship between the record head and the playback head during the playback of a tape. The longitudinal phase of the tape has been shifted to put the record head on track via a phase offset in the control track servo. The automatic scan-tracking playback head has followed the track and now there appears to be an error in the automatic scan-tracking elevation measurement. This apparent error in the automatic scan-tracking elevation measurement does not represent a physical error, it merely compensates for the offset in the control track phase that was necessary to properly align the record head path with the data tracks. Note that Figure 7 represents the proper conditions for recording, which is the desired result of the invention.

Processing of the data in the signal system needs to be synchronized with head and tape motion and timed so that the data is ultimately recorded according to the tape format on tape and recovered reliably. It is sufficient to use the system references to clock the data through the signal system and onto the tape, provided the servo system has been appropriately calibrated and controls head and tape positions according to the same system references for properly edited recordings.

The process for alignment begins with the recording of a new tape operating the recorder in a read-after-write (or 'record confidence') mode wherein the playback head reads a track recorded during an immediately previous scan of the tape.

During this process the automatic scan-tracking elevation and playback head timing are monitored, and low-pass filtered to eliminate noise generated by the automatic scan-tracking servo system. The 'playback timing' is the interval between the time when the transducing gap of the playback head enters the tape path until an identifying mark (illustrated in Figure 1 as helical reference point 4) is detected and is stored as the difference between the scanner reference signal and the detection of the identifying mark. The values associated with elevation and timing are stored in a non-volatile memory and become the operative data which permits alignment within the invention.

Since, in this step, the machine is playing back its own immediately previous recording, the positional relationship between the longitudinal head and data heads mounted on the rotating scanner does not affect the measurements of the relationship between the data heads themselves. The record head elevation is fixed mechanically, any automatic scan-tracking elevation that deviates from the nominal position represents an elevation error that is entirely attributable to the relationship between record and play heads on the scanner.

The second step in the alignment process is to play back a standard tape, using automatic scan-tracking. Such a tape has been tested and certified to be mechanically correct. The longitudinal tracking is adjusted until the automatic scan-tracking elevation is the same as it was during the previous recording of a new tape in the first step. To improve accuracy, the elevation data is low-pass filtered and the servos are allowed to settle before a final reading is taken. At this point the record head is on track. Any apparent longitudinal error represents longitudinal head mechanical position error, which value is retained in memory. This value can be used to provide compensation during all subsequent operations. The value can be displayed by the system for an operator if desired, but this is not necessary.

Then, the final step in the alignment process is to operate upon a selected tape and to perform the aforementioned alignment steps in conjunction with the automatic scan-tracking servo system of the recorder.

An analogous operation may be used for the adjustment of helical timing. The scanner phase is adjusted until the automatic scan-tracking head timing is comparable to the value attained during the recording of the new tape in the first step of the process. Consequently, the record head timing matches that prescribed by the standard tape. Then the value of the scanner phase is retained in memory as a scanner phase mechanical positional error and that value is used by the algorithm to compensate during all subsequent cycles of operation of the system.

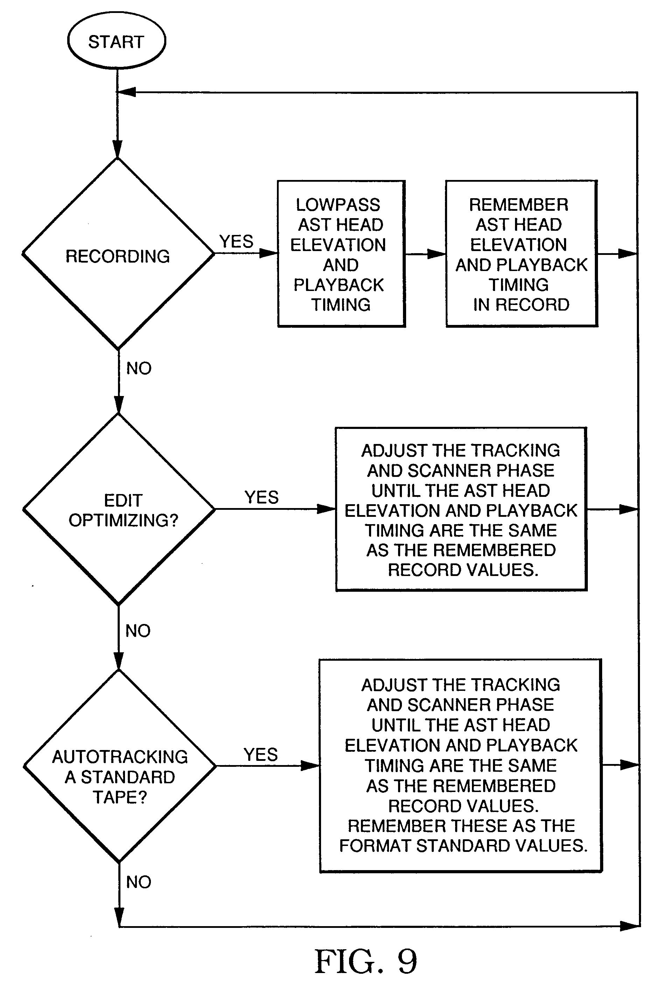

Referring now to Figure 9, a flowchart of the algorithm is illustrated. The filtered values for the automatic scan-tracking elevation are processed whenever the transport is in record. This is done to compensate for any drift in the automatic scan-tracking overtime. In the embodiment illustrated, the algorithm treats all tape, including standard tape, in the same fashion. Consequently, the process flows are active whenever appropriate and the flowchart is illustrated as continuous, without end.

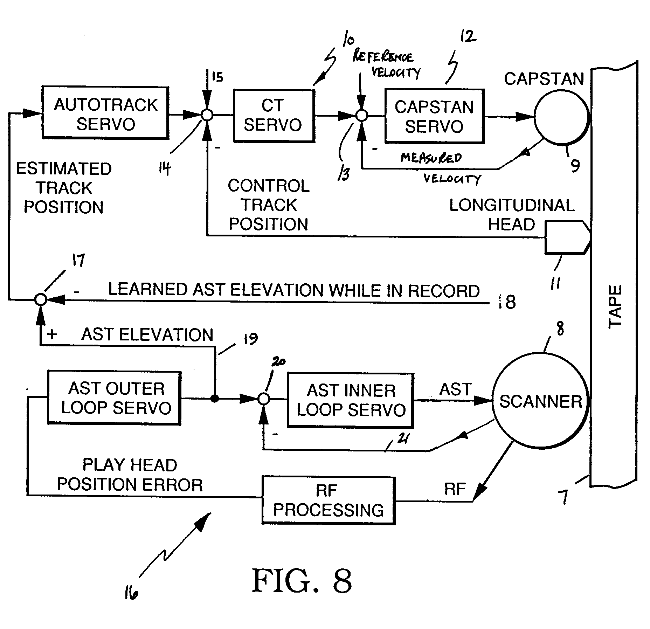

Figure 8 illustrates a typical servo system for a helical-scan recorder using automatic scan-tracking and operating in accordance with the invention and in particular in accordance with the algorithm of Figure 9. The recorder basically comprises a scanner 8 and a capstan 9.

The longitudinal phase and velocity of the tape 7 are regulated by means of a control track servo 10, which receives a position feedback signal from the control track play head 11, and a capstan servo 12. The capstan servo loop is an inner loop in the control track servo loop. A reference velocity, corresponding to the desired tape velocity, is compared at a summing junction 13 with a measured velocity of the capstan, which is assumed to be in non-slip contact with the tape. The measured velocity may be obtained from a tachometer driven by the capstan. The capstan motor is regulated to make the reference velocity and the measured velocity equal.

The control track servo is a loop around the capstan servo. Control track information, which is read from the tape by the control tack playback head 11, provides position information about the data recorded on tape. The control track servo forms at summing junction 14 an error between the desired position of the information on tape, as given by the servo reference, and the actual position of the information on tape, as indicated by the position feedback signal transduced from the control track 11. The error signal, modified by a signal appearing on line 15 and representing the aforementioned stored mechanical position error of the head 11, acts as an offset for the inner loop servo. When control track information cannot be used (on a blank tape, for example), the control track servo loop is not active, the capstan follows simply the reference signal provided at summing junction 13 instead.

In accordance with the prescribed algorithm, the head-to-tape alignment is monitored by automatic scan-tracking and the playback head elevation is compared to the elevation 'learned' while the machine was in the record mode.

The difference is shown as the 'estimated track position' in Figure 8.

Ultimately, it is important to control the longitudinal position of the tape with regard to the heads mounted on the scanner. For this purpose, the automatic scan-tracking servo 16 is used to provide a reference signal for the control track servo. This reference input to the control track servo is obtained from an error formed at a summing junction 17 between the stored head elevation (a signal on line 18) and the actual head elevation (a signal on line 19). The latter is obtained by means of the automatic scan-tracking loop 16 and in particular by means of amplitude discrimination of the radio frequency output of the playback head. The servo 16 has, as usual, an inner loop which forms at the summing junction 20 an error between the commanded position of the playback head and its actual position, which may be represented by a signal on line 21 from the actuator that carries the playback head. The automatic scan-tracking servo 16 develops a track registration error signal, derived from the playback signal amplitude, keeps the playback head centred on the track with which it is in a transducing relationship. The automatic scan-tracking servo may also be used in a somewhat different manner as described in some of the aforementioned publications to cause the head to execute various special movements such as track-to-track jumps but such movements and the special effects thereby produced are not directly relevant to the present invention.

The process described herein results in automation of a number of alignment steps that were previously accomplished, if at all, by experienced operators performing manual mode adjustments. The process of the invention is believed to provide much improved quality of adjustment, in a shorter time, without dependency upon the training and skill of an operator. In addition, the system described minimizes interchange edit errors, and thereby improves one of the most difficult operational tasks associated with a helical recorder transport.

## Claims

1. A method of adjustment of a helical-scan recorder that embodies a record head, a playback head and an automatic scan-tracking system (16) associated with the playback head, the method comprising making a new recording on a tape by means of the recorder and at the same time playing back the recording while using the automatic scan-tracking system; storing an elevation of the playback head as obtained from the automatic scan-tracking system; and playing back a recorded tape and adjusting the longitudinal velocity and phase of the tape while operating the automatic scan-tracking system until a measured elevation (19) of the playback head corresponds to the stored elevation (18).

2. A method according to claim 1 wherein the longitudinal velocity and phase of the tape are controlled by means of a control-track servo (10) having a velocity-closed inner loop (12) and wherein the difference between the stored elevation and the measured elevation of the playback head is applied as an offset to the control-track servo.

3. A method for adjusting a helical-scan recorder that includes a rotary scanner carrying a record head and a playback head which has an associated automatic scan-tracking system (16), comprising the steps of:
(a) recording in a memory automatic scan-tracking elevation and playback timing from a tape made on the transport of the recorder;
(b) adjusting the longitudinal tracking of the tape and the phase of the scanner to a standardised tape until the automatic scan-tracking head elevation and playback timing are the same as the recorded values; and
(c) reading a selected tape that is to be edited and adjusting the longitudinal tracking and scanner phase until the automatic scan-tracking system indicates that the head elevation and playback timing have been corrected.
